# EUROPÄISCHE PATENTSCHRIFT

(11) **EP 1 178 579 B1**
(45) Veröffentlichungstag und Bekanntmachung des Hinweises auf die Patenterteilung: **26.08.2009**
(21) Anmeldenummer: 01118288.8
(22) Anmeldetag: 30.07.2001
(51) Int. Cl.: H01S 3/042

(54) **Laserverstärkeranordnung**
Laser amplifier
Amplificateur laser

(30) Priorität: 04.08.2000 DE 10038006
(43) Veröffentlichungstag der Anmeldung: 06.02.2002
(73) Patentinhaber: TRUMPF Laser GmbH + Co. KG, 78713 Schramberg (DE)
(72) Erfinder: Huonker, Martin, Dr., 78628 Rottweil (DE); Schmitz, Christian, Dr., 72160 Horb (DE); Voss, Andreas, Dipl.-Phys., 78713 Schramberg (DE)
(74) Vertreter: Hoeger, Stellrecht & Partner Patentanwälte

(56) Entgegenhaltungen:
- EP-A- 0 632 551
- EP-A- 0 903 819
- US-A- 5 329 539
- US-A- 5 455 838
- US-A- 5 910 522

## Beschreibung

Die Erfindung betrifft eine Laserverstärkeranordnung mit einem zwei zueinander gegenüberliegende Flachseiten aufweisenden scheibenförmigen Festkörper, der ein laseraktives Medium umfaßt, einem Kühlkörper mit einer Trägerfläche, welcher eine der Flachseiten des Festkörpers zugewandt angeordnet ist und mit welcher diese Flachseite zur Ableitung von Wärme thermisch gekoppelt ist.

Eine derartige Laserverstärkeranordnung ist beispielsweise aus den der EP 0 632 551 bekannt, wobei der Festkörper mit der Trägerfläche des Kühlkörpers durch eine Metallisierung und eine Kontaktschicht aus weichem Metall Flächenhaft mechanisch und thermisch verbunden wird.

Insbesondere ist bei der Verbindung zwischen Festkörper und Kühlkörper wesentlich, daß der mechanisch aufgrund seiner geringen Dicke sehr labile Festkörper die gewünschte Form behält und selbst bei Beibehaltung seiner Form möglichst geringen mechanischen Beanspruchungen beim Betrieb der Laserverstärkeranordnung ausgesetzt ist.

Diese Aufgabe wird mit einer Laserverstärkeranordnung nach dem Anspruch 1 erfindungsgemäß dadurch gelöst, daß die Flachseite des Festkörpers mit einer Trägerfläche durch eine Klebstoffschicht mechanisch und thermisch gekoppelt ist, welche aus einem Klebstoff hergestellt ist, der im wesentlichen volumeninvariant von einem flüssigen Zustand in einen festen, vernetzten Zustand übergeht und daß die Klebstoffschicht einen aktiven Klebstoffschichtbereich mit einem Wärmewiderstand von weniger als 10 K • mm²/W aufweist.

Mit dieser Lösung ist es erreichbar, die mechanisch äußerst empfindlichen Festkörper fest und ohne nennenswerte mechanische Deformationen am Kühlkörper zu fixieren und dabei eine Wärmeableitung aus dem Festkörper zu erreichen, welche eine ausreichende Kühlung des Festkörpers über den Kühlkörper gewährleistet, ohne daß durch die Klebstoffschicht eine Drosselung des Wärmeflusses von dem Festkörper in den Kühlkörper erfolgt.

Dabei ist unter dem Begriff "im wesentlichen volumeninvariant" zu verstehen, daß der Klebstoff beim Übergang von seinem flüssigen Zustand in seinen festen, vernetzten Zustand eine Volumenänderung von weniger als 5%, noch besser weniger als 2% aufweist.

US-A-5 329 539 offenbart eine Laserverstärkeranordnung mit einem massiven Festkörper, der ein laseraktives Medium umfaßt, wobei eine Flachseite des Festkörpers mit der Trägerfläche eines Kühlkörpers durch eine Klebstoffschicht mechanisch und thermisch gekoppelt ist.

EP-A-0 903 819 offenbart eine Laserverstärkeranordnung mit einem massiven Festkörper, der ein laseraktives Medium umfaßt, mit einen auf einer Flachseite des Festkörpers angeordneten Reflektor für das Pumplichtstrahlungsfeld und einem Kühlkörper mit einer Trägerfläche, welcher dieser Flachseite zugewandt angeordnet ist, wobei der Festkörper durch eine Klebstoffschicht mit der Trägerfläche mechanisch und thermisch gekoppelt ist.

In US-A-5 329 539 und EP-A-0 903 819 übergeht der Klebstoff im wesentlichen volumeninvariant von einem flüssigen Zustand in einen festen, vernetzten Zustand, wobei die Klebstoffschicht einen Wärmewiderstand von weniger als 10 K·mm²/W aufweist.

In EP-A-0 632 551, US-A-5 329 539 und EP-A-0 903 819 wird das Pumplichtstrahlungsfeld in den Festkörper über mindestens eine quer zur Kühloberfläche verlaufende Seitenfläche eingekoppelt.

Ein besonders zweckmäßiges Ausführungsbeispiel der erfindungsgemäßen Laserverstärkeranordnung sieht vor, daß der Wärmewiderstand des aktiven Klebstoffschichtbereichs kleiner als 5 K·mm²/W, noch besser 2 K·mm²/W, ist.

Hinsichtlich der Ausdehnung des aktiven Klebstoffschichtbereichs relativ zur gesamten Klebstoffschicht wurden bislang keine näheren Aussagen gemacht. So könnte prinzipiell der aktive Klebstoffschichtbereich die gesamt Klebstoffschickt umfassen. Vorzugsweise umfaßt der aktive Klebstoffschichtbereich jedoch nur einen Teilbereich der Klebstoffschicht.

Besonders günstig ist es dabei, wenn der aktive Klebstoffschichtbereich mindestens der Bereich der Klebstoffschicht ist, der an einen Volumenbereich des Festkörpers mit dem Reflektoren angrenzt, in welchem eine Pumpleistungsdichte des Pumplichtstrahlungsfeldes von ungefähr 80 % des Maximalwerts und mehr vorliegt.

D. h., daß vorzugsweise der aktive Klebstoffschichtbereich dazu dient, aus dem sehr stark gepumpten Volumenbereich des Festkörpers mit dem Reflektoren, nämlich dem mit 80 % der Pumpleistungsdichte und mehr gepumpten Bereich des Festkörpers, die Wärme abzuführen.

Noch vorteilhafter ist es, wenn der aktive Klebstoffschichtbereich mindestens der Bereich der Klebstoffschicht ist, der an einen Volumenbereich des Festkörpers mit dem Reflektoren angrenzt, in welchem eine Pumpleistungsdichte des Pumplichtstrahlungsfeldes von ungefähr 70 %, noch besser ungefähr 60 %, des Maximalwerts und mehr vorliegt.

Darüber hinaus besteht eine weitere Möglichkeit, den aktiven Klebstoffschichtbereich dadurch zu definieren, daß der aktive Klebstoffschichtbereich mindestens der Bereich der Klebstoffschicht ist, welcher an den vom Pumplichtstrahlungsfeld durchsetzten Volumenbereich des Festkörpers mit dem Reflektoren angrenzt.

Diese Definition erfaßt insbesondere all die Fälle, in welchen das Pumplichtstrahlungsfeld über eine der Flachseiten des Festkörpers in diesen eingekoppelt ist.

Eine weitere vorteilhafte Lösung sieht vor, daß der aktive Klebstoffschichtbereich mindestens der Bereich der Klebstoffschicht ist, welcher an den von mindestens zwei sich schneidenden Pumplichtstrahlungsfeldem durchsetzten Volumenbereich des Festkörpers mit dem Reflektoren angrenzt

Diese Definition des Volumenbereichs umfaßt die Fälle, in welchen mehrere Pumplichtstrahlungsfelder durch eine Flachseite des Festkörpers eingekoppelt werden.

Um darüber hinaus beim Betrieb der Laserverstärkeranordnung eine ausreichend stabile Fixierung des Festkörpers an dem Kühlkörper zu erreichen, ist vorzugsweise vorgesehen, daß die Klebstoffschicht eine Zugfestigkeit von größer als 1 N/mm² aufweist.

Noch besser ist es dabei, wenn die Klebstoffschicht eine Zugfestigkeit von größer als 5 N/mm² aufweist.

Darüber hinaus ist im Rahmen der erfindungsgemäßen Lösung weiter eine ausreichend hohe Scherfestigkeit der Klebstoffschicht notwendig. Besonders günstig ist es, wenn die Klebstoffschicht eine Scherfestigkeit von größer als 5 N/mm² aufweist. Noch besser ist es, wenn die Klebstoffschicht eine Scherfestigkeit von größer als 25 N/mm² aufweist.

Da beim Betrieb der Laserverstärkeranordnung der Festkörper durch ein Pumplichtstrahlungsfeld optisch angeregt wird und somit auch thermisch aufheizt, ist auch eine thermische Aufheizung der Klebstoffschicht in Betracht zu ziehen.

Diese thermische Aufheizung der Klebstoffschicht führt bei vielen Klebstoffen zu einer thermisch bedingten Formvarianz.

Da es bei der erfindungsgemäßen Lösung erheblich auf die gleichbleibende optische Qualität der Anordnung und Form des Festkörpers ankommt, ist es im Rahmen der erfindungsgemäßen Lösung besonders vorteilhaft, wenn die Klebstoffschicht im festen, vernetzten Zustand im wesentlichen thermisch forminvariant ist.

Unter dem Begriff "im wesentlichen thermisch forminvariant" ist dabei zu verstehen, daß die Klebstoffschicht in dem für die erfindungsgemäße Laserverstärkeranordnung relevanten Temperaturbereich von ungefähr 270 bis ungefähr 360 Kelvin maximal eine maximal zulässige Formänderung des Festkörpers-von 0,5 µm, noch besser 0,1 µm, aufweist.

Hinsichtlich der Art des Klebstoffs wurden bislang keine weiteren Angaben gemacht. So sieht ein vorteilhaftes Ausführungsbeispiel vor, daß der Klebstoff ein Zweikomponentenklebstoff ist, da dieser besonders geeignet ist, die vorstehend genannten Forderungen zu erfüllen.

Insbesondere ist ein erfindungsgemäß im wesentliches volumeninvariantes Verhalten besonders einfach dann erreichbar, wenn der Klebstoff stoffaustauschfrei vom flüssigen Zustand in den festen, vernetzten Zustand übergeht.

Unter dem Begriff "stoffaustauschfrei" ist dabei zu verstehen, daß keinerlei Austausch von Stoffen mit der Umgebung erfolgt, das heißt weder die Aufnahme von Stoffen, z. B. Wasserdampf, oder die Abgabe von Stoffen, z. B. Lösungsmitteln, oder Reaktionsprodukten, wie zum Beispiel Essigsäure, beim Aushärten erfolgt.

Eine besonders günstige Variante sieht vor, daß der Klebstoff ein durch Energiezufuhr mittels Bestrahlung aushärtender Klebstoff ist.

Eine derartige Energiezufuhr mittels Bestrahlung wäre beispielsweise auch die Energiezufuhr mittels Teilchenstrahlung oder elektromagnetischer Strahlung.

Besonders günstig ist es hierbei, wenn der Klebstoff durch Bestrahlung mit Licht aushärtet.

Eine besonders bevorzugte Variante sieht dabei vor, daß der Klebstoff durch Bestrahlung mit UV-Licht aushärtet.

Im Rahmen der bislang beschriebenen erfindungsgemäßen Lösung wurde im Zusammenhang mit derKlebstoffschicht lediglich erläutert, daß diese Klebstoff enthält.

Die Viskosität des Klebstoffes im nicht vernetzten Zustand wurde bislang nicht spezifiziert. Um besonders dünne Klebstoffschichten zu erreichen, ist vorzugweise vorgesehen, daß der Klebstoff im nicht vernetzten Zustand eine Viskosität von weniger als 1000 mPa·S aufweist.

Es besteht jedoch aber auch die Möglichkeit, die Eigenschaften des Klebstoffs noch dadurch zu verändern, daß diesem Füllstoffe zugegeben werden.

Besonders vorteilhaft ist es, wenn die Klebstoffschicht füllstofffrei ist, da die Verwendung eines Klebstoffs ohne Füllstoff einerseits die Viskosität des Klebstoffs so gering wie möglich halten läßt und andererseits dadurch bei fehlenden Füllstoffen die Dicke der Klebstoffschicht besonders gering gehalten werden kann.

Eine andere vorteilhafte Ausführungsform sieht jedoch vor, daß die Klebstoffschicht einen Füllstoff aufweist, ein derartiger Füllstoff hat den Vorteil, daß er die Möglichkeit schafft, den Wärmewiderstand der Klebstoffschicht zu verbessern, allerdings zumindest in manchen Fällen auf Kosten der erreichbaren minimalen Dicke der Klebstoffschicht und auf Kosten der Viskosität.

Ein anderer Füllstoff könnte beispielsweise Nanopartikel aufweisen, die den Vorteil bieten würden, daß sie eine relativ dünne Klebstoffschicht zulassen.

Eine andere Lösung sieht vor, daß der Füllstoff Füllkörper mit einer Größe im Mikrometerbereich aufweist.

Hinsichtlich der Art der Füllkörper ist es vorteilhaft, wenn der Füllstoff Füllkörper aus einem oder mehreren der Stoffe Bornitrid, Diamant, Silber, Kupfer und/oder Gold aufweist.

Hinsichtlich der Dicke der Klebstoffschicht wurden bislang keine näheren Angaben gemacht. So ist es insbesondere bei füllstofffreier Klebstoffschicht vorteilhaft, wenn der an den aktiven Volumenbereich angrenzende Klebstoffschichtbereich eine Dicke von weniger als 5µm aufweist. Noch besser ist es, wenn der an den aktiven Volumenbereich angrenzende Klebstoffschichtbereich eine Dicke von weniger als 2µm, noch besser weniger als 1µm, aufweist.

Andererseits besteht bei der Verwendung von Füllstoffen in der Klebstoffschicht die Möglichkeit, diese so auszuführen, daß der in den aktiven Volumenbereich angrenzende Klebstoffschichtbereich eine Dicke von weniger als 50µm aufweist, wobei auch in diesem Falle vorzugsweise die Dicke des Klebstoffschichtbereichs so dünn wie möglich gehalten wird, so daß beispielsweise im Fall von Nanopartikeln ebenfalls Dicken von wenigen Mikrometern angestrebt werden.

Hinsichtlich der Ausbildung der optischen Eigenschaften der Klebstoffschicht wurden bislang ebenfalls keine näheren Angaben gemacht. Prinzipiell könnte die Klebstoffschicht beliebig, also auch beispielsweise undurchsichtig sein. Besonders günstig ist es jedoch, wenn die Klebstoffschicht optisch transparent ist, um möglichst wenig negative Beeinflussung der optischen Eigenschaften des Festkörpers zu erreichen, insbesondere eine negative Beeinflussung durch Absorption des Klebstoffs.

Hinsichtlich der Ausbildung der Klebstoffschicht selbst wurde bislang keine näheren Angaben gemacht. So sieht ein zweckmäßiges Ausführungsbeispiel vor, daß die Klebstoffschicht eine im wesentlichen gleichbleibende Dicke aufweist. In einem derartigen Fall sind die Auswirkungen von senkrecht zur Trägerfläche erfolgenden Volumenänderungen der Klebstoffschicht auf die optische Qualität des Festkörpers gering, da diese über die gesamte Ausdehnung der zweiten Flachseite im wesentlichen gleichmäßig erfolgen.

Eine andere vorteilhafte Lösung sieht vor, daß die Klebstoffschicht ausgehend von einem an ein Zentrum des aktiven Volumenbereichs angrenzenden zentralen Klebstoffschichtbereich in radialer Richtung von dem Zentrum ausgehend eine zunehmende Dicke aufweist. Diese Lösung hat den Vorteil, daß sich in einfacher Weise der Festkörper auf einen Klebstofftropfen aufsetzen und sich diese Form der Klebstoffschicht durch Aufdrücken des Festkörpers erreichen läßt, da damit aufgrund der angestrebten Form der Klebstoffschicht in einfacher Weise eine Verdrängung von Innen nach Außen und somit eine relativ dünne Ausbildung der Klebstoffschicht erreichbar ist.

Besonders zweckmäßig ist es dabei, wenn die Klebstoffschicht einen zu dem Zentrum des aktiven Volumenbereichs im wesentlichen radial symmetrischen Verlauf der Dicke aufweist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel einer erfindungsgemäßen Laserverstärkeranordnung;
- Fig. 2: einen vergrößerten ausschnittsweisen Schnitt ähnlich Fig. 1 im Bereich eines Festkörpers und Kühlkörpers;
- Fig. 3: einen Schnitt ähnlich Fig. 2 eines zweiten Ausführungsbeispiels;
- Fig. 4: einen Schnitt ähnlich Fig. 2 dem zweiten Ausführungsbeispiel vor einem Aufsetzen des Festkörpers auf den Kühlkörper;
- Fig. 5: einen Schnitt ähnlich Fig. 4 nach einem Aufsetzen des Festkörpers auf einen Tropfen Klebstoff auf dem Kühlkörper;
- Fig. 6: eine Draufsicht in Richtung des Pfeils A in Fig. 5 mit Darstellung der sich aufgrund der variierenden Dicke der Klebstoffschicht ergebenden Newton'schen Ringe;

- Fig. 7: einen Schnitt ähnlich Fig. 5 bei im wesentlichen symmetrischer Ausbildung der Klebstoffschicht;
- Fig. 8: eine Darstellung ähnlich Fig. 6 bei den Verhältnissen gemäß Fig. 7;
- Fig. 9: einen Schnitt ähnlich Fig. 2 durch ein drittes Ausführungsbeispiel;
- Fig. 10: einen Schnitt ähnlich Fig. 3 durch ein viertens. Ausführurigsbeispiel;
- Fig. 11: eine nochmals vergrößerte Schnittdarstellung ähnlich Fig. 2 bei einem fünften Ausführungsbeispiel mit einem mit Füllkörpern gefüllten Klebstoff und
- Fig. 12: eine Draufsicht auf ein sechstes, nicht erfindunsgemäßes Beispiel.

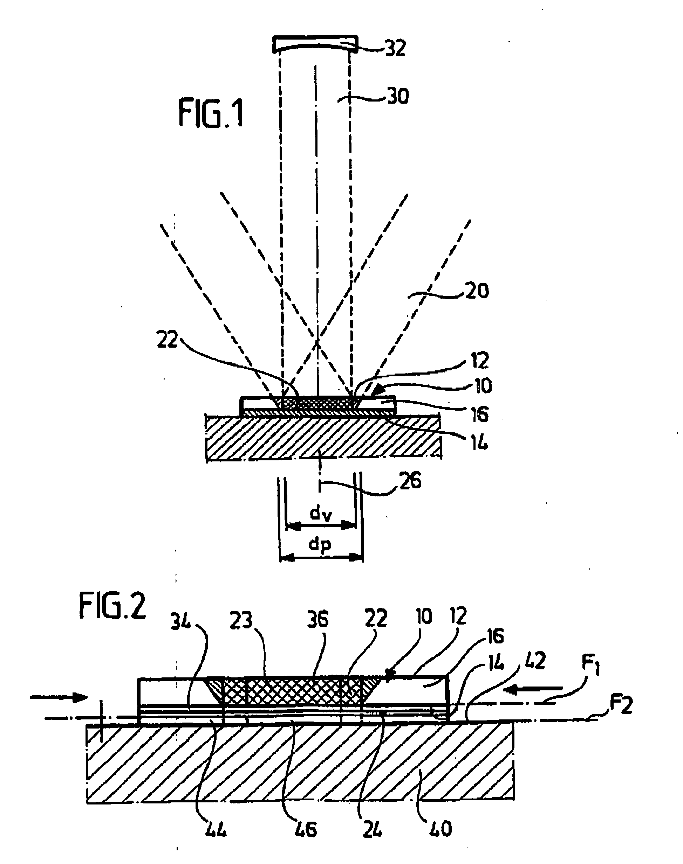

Ein erstes Ausführungsbeispiel einer Laserverstärkeranordnung, dargestellt in Fig. 1, umfaßt einen plattenförmigen Festkörper 10, welcher mit einem laseraktiven Medium versehen ist.

Vorzugsweise ist der Festkörper aus einem der Wirtskristalle YAG, YVO₄, Y₂O₃, Sc₂O₃, Lu₂O₃, KGdWO₄, KYWO₄, YAP, YALO, GGG, GSGG, GSAG, LSB, GCOB, FAP, SFAP, YLF und zusätzlich mit Nd³⁺, oder Yb³⁺ als laseraktivem Material dotiert.

Der Festkörper 10 ist dabei scheibenförmig ausgebildet und weist eine erste Flachseite 12 und eine gegenüberliegende zweite Flachseite 14 auf, zwischen denen sich eine eine Umfangsseite darstellende Schmalseite 16 erstreckt.

Der Festkörper 10 ist ferner von einem Pumplichtstrahlungsfeld 20 durchsetzt, welches das laseraktive Medium im Festkörper 10 anregt.

Die Einkopplung des Pumplichtstrahlungsfelds 20 erfolgt, so wie in Fig. 1 dargestellt, über die erste Flachseite 12, wobei das Pumplichtstrahlungsfeld 20 in einem Volumenbereich 22 das laseraktive Medium im Festkörper 10 optisch anregt.

Um das Pumplichtstrahlungsfeld 20 mehrfach hin- und herreflektieren zu können, ist der Festkörper 10 auf seiner zweiten Flachseite 14 mit einem Reflektor 24 für das Pumplichtstrahlungsfeld 20 versehen, so daß das Pumplichtstrahlungsfeld 20 über die erste Flachseite 12 in den Festkörper 10 eintritt und aufgrund der Reflexion am Reflektor 24 über die erste Flachseite 12 wieder austritt, vorzugsweise dabei durch externe Optiken wieder zurückreflektiert wird und wieder über die erste Flachseite 12 in den Festkörper 10 eintritt, am Reflektor 24 reflektiert wird und wieder über die erste Flachseite 12 austritt und dies gegebenenfalls mehrfach.

Durch diese Mehrfachreflexion läßt sich eine besonders effiziente Anregung des laseraktiven Mediums in dem Volumenbereich 22 erzeugen.

Der Volumenbereich 22, innerhalb von welchem durch das Pumplichtstrahlungsfeld 20 das laseraktive Medium im Festkörper 10 optisch angeregt wird, hat dabei eine Ausdehnung in Richtung der Flachseiten 12 oder 14, die in Fig. 1 mit dₚ bezeichnet ist, wobei diese Ausdehnung je nach Art des Einfalls und der Reflexion des Pumplichtstrahlungsfelds 20 in unterschiedliche Richtungen unterschiedlich groß sein kann. Lediglich im Fall einer rotationssymmetrischen Ausbildung des Volumenbereichs 22 zu einer Mittelachse 26, welche senkrecht auf den Flachseiten 12 und 14 steht, ist die Ausdehnung dₚ des Volumenbereichs 22 zu allen Seiten hin gleich groß.

Darüber hinaus wird der Festkörper 10 von einem Verstärkerstrahlungsfeld 30 durchsetzt, welches sich zwischen einem externen Reflektor 32 und einem Reflektor 34 erstreckt, welcher ebenfalls der zweiten Flachseite 14 zugeordnet ist.

Beispielsweise sieht eine vorteilhafte Lösung vor, daß die Reflektoren 24 und 34 zu einem einzigen Reflektor zusammengefaßt sind, welcher sowohl für das Pumplichtstrahlungsfeld 20 als auch für das Verstärkerstrahlungsfeld 30 reflektierend ist.

Es ist aber auch denkbar, zwei unterschiedliche Reflektorschichten auf der zweiten Flachseite 14 vorzusehen, beispielsweise eine unmittelbar auf der zweiten Flachseite 14 liegende Reflektorschicht 34 für das Verstärkerstrahlungsfeld 30 und eine auf der Reflektorschicht 34 liegende Reflektorschicht 24 für das Pumplichtstrahlungsfeld 20.

Bei dem dargestellten Ausführungsbeispiel ist das Verstärkerstrahlungsfeld 30 so geführt, daß es sich symmetrisch zur Mittelachse 26 ausbreitet. Dabei wird ein Volumenbereich 36 des Festkörpers 10 von dem Verstärkerstrahlungsfeld 30 durchsetzt, welcher kleiner aber auch größer sein kann als der Volumenbereich 22, welcher vom Pumplichtstrahlungsfeld 20 durchsetzt ist.

Der Volumenbereich 36 hat dabei eine Ausdehnung in Richtung der Flachseite 12 oder 14, die mit dᵥ bezeichnet ist und ebenfalls im Fall einer rotationssymmetrischen Ausbildung des Verstärkerstrahlungsfelds 30 zur Mittelachse 26 in Richtung der Flachseiten 12 und 14 gleich groß ist, in anderen Fällen unterschiedlich groß sein kann.

Der Festkörper 10 ist zur Kühlung auf einem als Ganzes mit 40 bezeichneten Kühlkörper angeordnet, welcher eine Trägerfläche 42 aufweist, die der zweiten Flachseite 14 zugewandt ist.

Auf der Trägerfläche 42 ist eine als Ganzes mit 44 bezeichnete Klebstoffschicht aufgetragen, welche den Festkörper 10 trägt, wobei der Festkörper 10 mit der zweiten Flachseite 14 der Trägerfläche 42 zugewandt ist und mit den mit der zweiten Flachseite 14 verbundenen Reflektoren 24 und 34 auf der Klebstoffschicht 44 aufliegt, so daß vorzugsweise über die gesamte Ausdehnung der zweiten Flachseite 14 quer zur Mittelachse 26 eine Wärmeleitung von der zweiten Flachseite 14 in Richtung quer zu dieser zur Trägerfläche 42 hin erfolgt, wobei die Reflektoren 24 und 34 gleichzeitig ebenfalls die Wärme flächenhaft von der zweiten Flachseite 14 in die Klebstoffschicht 44 einleiten, die diese dann über die Trägerfläche 42 in den Kühlkörper 40 einleitet.

Da primär in dem von dem Teil des Pumplichtstrahlungsfelds 20 mit der größten Pumpleistung durchsetzten Teil 23 des Volumenbereichs 22 eine nennenswerte Erwärmung im Festkörper 10 eintritt, erfolgt vorzugsweise über einen an diesen Teil 23 des Volumenbereichs 22 angrenzenden aktiven Klebstoffschichtbereich 46 im wesentlichen die Ableitung der in dem Volumenbereich 22 durch das Pumplichtstrahlungsfeld 20 erzeugten Wärme auf den Kühlkörper 40.

Der aktive Klebstoffschichtbereich 46 ist vorzugsweise so zu wählen, daß er den gesamten, vom Verstärkerstrahlungsfeld 30 durchsetzten Teil 23 des Volumenbereichs 22 abdeckt, vorzugsweise jedoch auch noch den größeren, vom Pumplichtstrahlungsfeld 20 durchsetzten Volumenbereich 22.

Bei dem in Fig. 1 und 2 dargestellten Ausführungsbeispiel erstreckt sich die zweite Flachseite 14 in einer Fläche F1, welche eine Ebene darstellt und außerdem erstreckt sich auch die Trägerfläche 42 in einer Fläche F2, welche ebenfalls eine Ebene darstellt, so daß die Klebstoffschicht 44 über die gesamte Ausdehnung der zweiten Flachseite 14 eine Dicke D aufweist, die im wesentlichen konstant ist.

Vorzugsweise ist in diesem Fall bei einem ungefüllten Klebstoff vorgesehen, daß der Wärmewiderstand der Klebstoffschicht 44 senkrecht zur Trägerfläche 42 kleiner ist als 5 K•mm²/W. Noch besser ist es, wenn der Wärmewiderstand der Klebstoffschicht 44 kleiner ist als 2 K·mm²/W. Beispielsweise ist eine derartige Klebstoffschicht mit dem Klebstoff "Norland Optical Adhesive 61" der Firma Norland Products erhältlich.

Da die Klebstoffschicht 44 über ihre gesamte Ausdehnung in Richtung der zweiten Flachseite 14 im wesentlichen gleich dick ist, ist die Dicke D und hiermit zwangsläufig auch der Wärmewiderstand des Klebstoffschichtbereichs 46, welcher sich in Richtung der zweiten Flachseite 14 zumindest über die Ausdehnung des vom Verstärkerstrahlungsfeld 30 durchsetzten Volumenbereich 36 erstreckt, vorzugsweise jedoch sich auch über die Ausdehnung des vom Pumplichtstrahlungsfeld 20 durchsetzten Volumenbereichs 22 erstreckt, entsprechend gewählt.

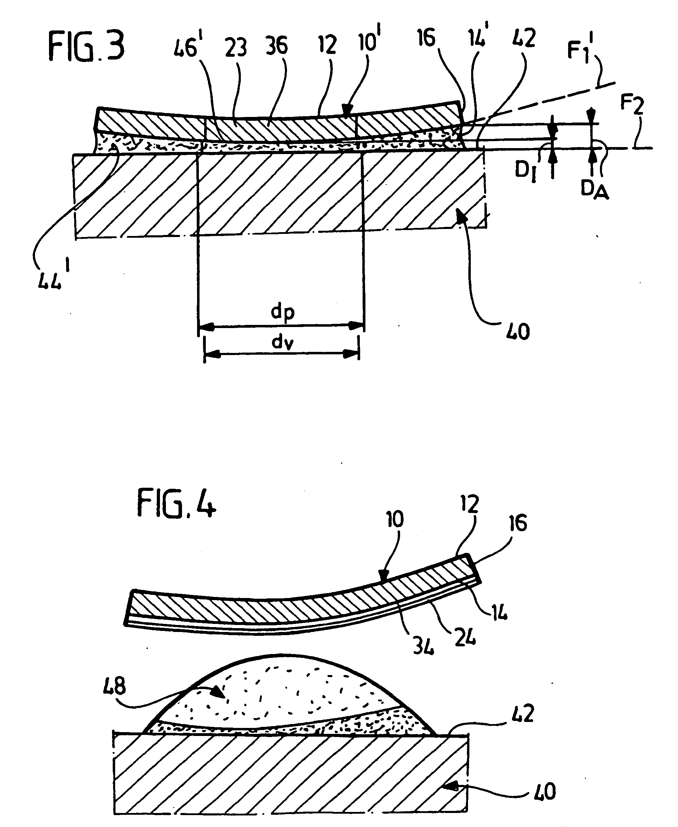

Bei einem zweiten Ausführungsbeispiel einer erfindungsgemäßen Laserverstärkeranordnung, dargestellt in Fig. 3, ist der Festkörper 10' so ausgebildet, daß dessen zweite Flachseite 14' eine Krümmung aufweist und somit in einer Fläche F1' liegt, welche beispielsweise einen Ausschnitt aus einer Kugelfläche darstellt.

Ferner ist die Trägerfläche 42, welche sich in der Fläche F2 erstreckt, als ebene Fläche ausgebildet, so daß sich insgesamt eine Klebstoffschicht 44' ergibt, die in dem aktiven Klebstoffschichtbereich 46' eine Dicke D_{I} aufweist, welche vorzugsweise bei einem ungefüllten Klebstoff kleiner 2 µm, noch besser kleiner 1 µm, ist, während die Dicke D der Klebstoffschicht 44' in radialer Richtung von der Mittelachse 26 ausgehend ansteigt und beispielsweise im Bereich der Schmalseite 16 eine Dicke D_{A} aufweist, welche größer ist als die Dicke D_{I}, beispielsweise das Doppelte der Dicke D_{I} oder mehr beträgt, wobei die Dicke D_{A} auch davon abhängt, inwieweit sich der Festkörper 10' über den vom Verstärkerstrahlungsfeld 30 durchsetzten Volumenbereich 36 hinaus erstreckt.

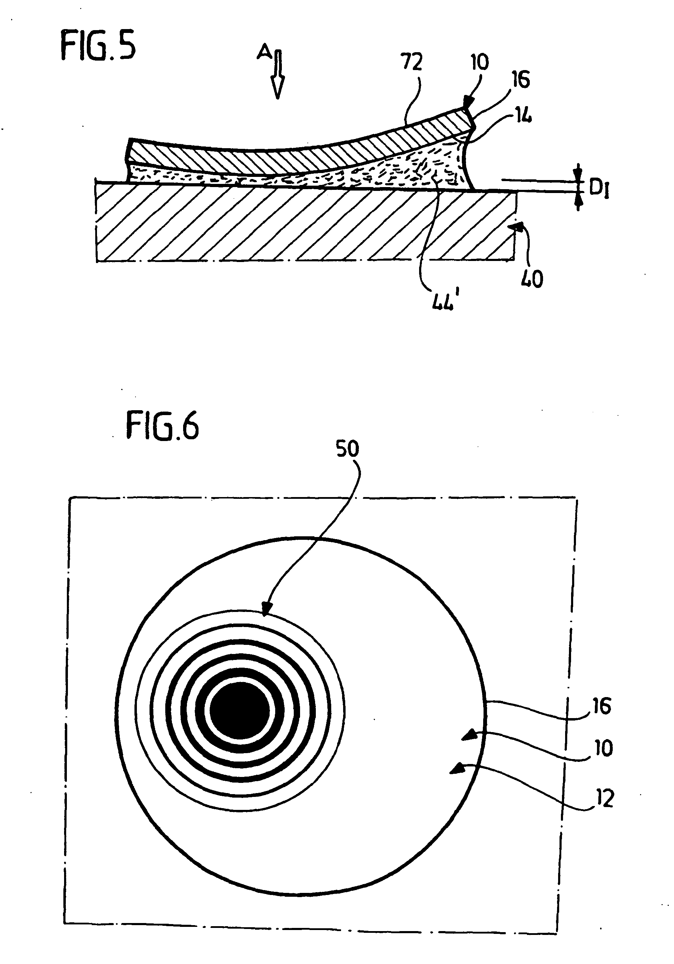

Der Vorteil einer Klebstoffschicht 44' mit variabler Dicke D, insbesondere einer kontinuierlich von der Mittelachse 26 in radialer Richtung zunehmenden Dicke D, ist darin zu sehen, daß in vorteilhafter Weise ein Verkleben des Festkörpers 10 mit dem Kühlkörper 40 möglich ist, nämlich dadurch, daß auf die Trägerfläche 42 ein Tropfen 48 von Klebstoff aufgetragen wird und anschließend der Festkörper 10 mit seiner zweiten Flachseite 14 und den vorhandenen Reflektorschichten 24 und 34 auf den Tropfen 48 aufgesetzt wird, wobei sich in einfacher Weise der Klebstoff des Tropfens 48 radial nach außen verpressen läßt, um eine möglichst dünne Klebstoffschicht 44 zu erhalten, wie in Fig. 5 dargestellt ist.

Dabei besteht die Möglichkeit, die dünnste Stelle der Klebstoffschicht 44 mit der Dicke D_{I}, wie in Fig. 6 dargestellt, durch sogenannten Newton'sche Ringe 50 zu erkennen.

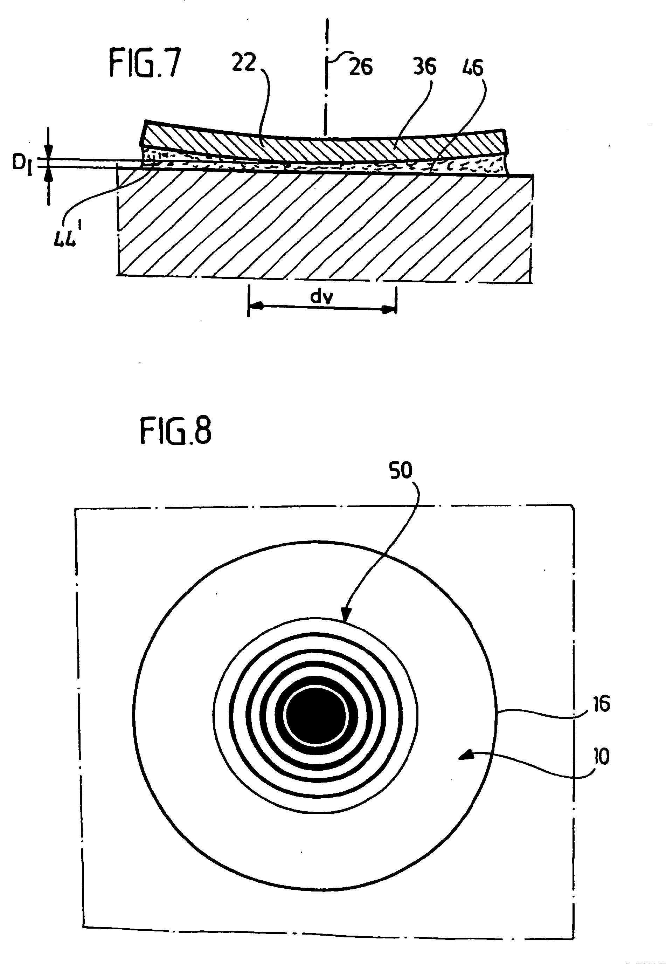

Ferner besteht die Möglichkeit, durch die Lage der Newton'schen Ringe 50 relativ zur durch die Schmalseite 16 vorgegebenen äußeren Berandung des Festkörpers 10 die Lage des Bereichs mit der geringsten Dicke D zu erkennen und den Festkörper 10 so auf den Kühlkörper 40 aufzusetzen, daß, wie in Fig. 7 und 8 dargestellt, die Newton'schen Ringe 50 ungefähr zentriert zur durch die Schmalseite 16 vorgegebenen Außenberandung des Festkörpers 10 liegen und folglich der aktive Klebstoffschichtbereich 46, welcher vorzugsweise symmetrisch zur Mittelachse 26 angeordnet ist, auch derjenige Bereich der Klebstoftchicht 44' ist, welcher die geringste Dicke D_{I} aufweist und an den Volumenbereich 36 angrenzt, der durch das Verstärkerstrahtungsfeld 30 durchsetzt ist oder noch besser auch an den Volumenbereich 22 angrenzt, der durch das Pumplichtstrahlungsfeld 20 durchsetzt ist.

Vorzugsweise ist dabei der Klebstoff ein Klebstoff, welcher durch Energiezufuhr aufgrund von Bestrahlung mit beispielsweise UV-Licht aushärtet, wobei die Bestrahlung mit UV-Licht durch den Festkörper 10 hindurch, das heißt über die erste Flachseite 12 in den Festkörper 10 einfallendes UV-Licht erfolgt, welches den Festkörper 10 durchsetzt, aus der zweiten Flachseite austritt und auch die Reflektoren 24 und 34 durchsetzt. Dies ist möglich, da die Wellenlänge des Pumplichtstrahlungsfeldes 20 und des Verstärkerstrahlungsfeldes 30 jeweils im Infraroten liegt, so daß die Reflektoren 24 und 34 für UV-Licht durchlässig gewählt werden können.

Es ist aber auch denkbar, die Klebstoffschicht 44' durch den Kühlkörper 40 hindurch zu bestrahlen, wenn dieser aus einem für das entsprechende Licht durchlässigen Material ist, beispielsweise aus einem CVD-Diamant.

Damit besteht in einfacher Art und Weise die Möglichkeit, einerseits, wie in Fig. 7 und 8 dargestellt, die korrekte Ausrichtung des Festkörpers 10 relativ zum Kühlkörper 40 über die Newton'schen Ringe 50 zu kontrollieren und einzustellern und dann in dieser Einstellung des Festkörpers 10 relativ zum Kühlkörper 40 den Klebstoff zur Bildung der Klebstoffschicht 44' auszuhärten.

Dabei ist es im Rahmen der erfindungsgemäßen Lösung besonders vorteilhaft, wenn der Klebstoff ohne Stoffaustausch mit der Umgebung, das heißt ohne Austausch von Wasserdampf, Lösungsmittel oder flüchtigen Chemikalien, wie zum Beispiel Essigsäure, aushärtet, da dann der Aushärtevorgang im wesentlichen volumeninvariant, das heißt mit einer Volumenveränderung von weniger als 5%, noch besser weniger als 2%, erfolgt, und die einmal erreichte Ausrichtung des Festkörpers 10 relativ zum Kühlkörper 40 während des Aushärtvorgangs im wesentlichen erhalten bleibt, so daß insbesondere keine Spannungen in Richtung parallel zur zweiten Flachseite 14 bei ausgehärtetem Klebstoff auf den Festkörper 10 wirken und somit verhindert wird, daß der Festkörper 10 aufgrund der in Richtung parallel zur zweiten Flachseite 14 wirkenden Spannungen unbrauchbar ist.

Der Klebstoff zur Bildung der Klebstoffschicht 44' ist dabei so gewählt, daß er im nicht vernetzten Zustand eine Viskosität von weniger als 1000 mPa·s aufweist, so daß das in Fig. 4 und 5 dargestellte Aufsetzen des Festkörpers auf den Tropfen 48 so erfolgen kann, daß das Fließen des Klebstoffs zum Erreichen einer möglichst dünnen Klebstoffschicht und zum Ausrichten des Festkörpers 10 relativ zum Kühlkörper 40 mit geringer Krafteinwirkung auf den Festkörper 10 erfolgen kann.

Ferner ist vorzugsweise vorgesehen, daß der ausgehärtete Klebstoff in der Klebstoffschicht 44' eine Zugfestigkeit von größer als 5 N/mm² aufweiset.

Außerdem wird eine Scherfestigkeit der Klebstoffschicht 44' von größer als 5 N/mm² bevorzugt. Noch besser ist es, wenn die Klebstoffschicht eine Scherfestigkeit von größer als 25 N/mm² aufweist.

Sämtliche Ausführungen zu Eigenschaften des Klebstoffs und der Klebstoffschicht 44' gelten in gleicher Weise auch für den Klebstoff und die Klebstoffschicht 44 die im ersten Ausführungsbeispiel beschrieben wurden.

Ferner ist es besonders vorteilhaft, wenn der Klebstoff so gewählt ist, daß dieser im vernetzten Zustand bei Bildung der Klebstoffschicht 44' thermisch im wesentlichen forminvariant ist, das heißt eine Erwärmung der Klebstoffschicht 44' zu einer Volumen- und Formänderung von weniger als 2% führt, so daß auch die Aufwärmung der Klebstoffschicht 44' im Zuge des Abführens von Wärme aus dem Festkörper 10 beim Anregen des laseraktiven Mediums mittels des Pumplichtstrahlungsfelds 20 zu keiner Formänderung der Klebstoffschicht 44' und somit zu keiner Änderung der Form des Festkörpers 10 führt.

Dies ist insbesondere wesentlich, wenn die Klebstoffschicht 44', wie z. B. beim zweiten Ausführungsbeispiel, eine variable Dicke D aufweist, denn bei einer thermischen Forminstabilität der Klebstoffschicht 44' würde sich beim Erwärmen derselben ein Verändern der Krümmung der Fläche F1' einstellen, in welcher sich die zweite Flachseite 14 erstreckt, da davon auszugehen ist, daß sich die Trägerfläche 42 des Kühlkörpers 40 nicht verändert und somit die Fläche F₂ ihre ebene Form beibehält, wenn der Kühlkörper 40 aus üblichen, gut wärmeleitenden Materialien wie beispielsweise Metallen oder auch Diamant hergestellt ist.

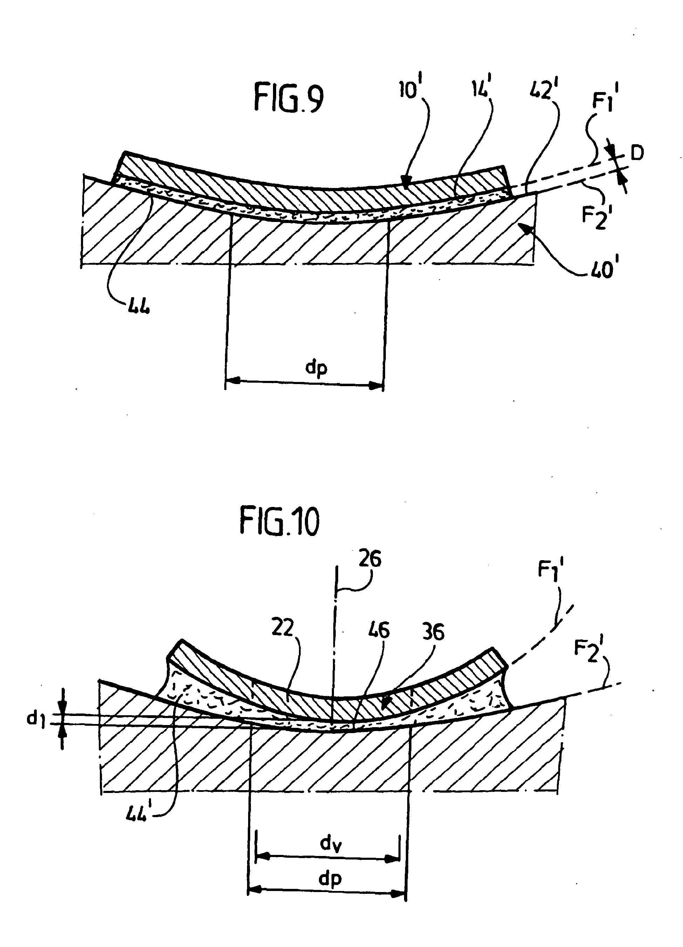

Bei einem dritten Ausführungsbeispiel, dargestellt in Fig. 9, ist nicht nur die Fläche F1' und somit die zweite Flachseite 14' des Festkörpers 10' gekrümmt, sondern auch die Trägerfläche 42', welche nunmehr in einer gekrümmten Fläche F2' liegt.

Vorzugsweise sind die Krümmungsradien der Flächen F1' und F2' so gewählt, daß diese stets in konstantem Abstand zueinander verlaufen. Dies führt dazu, daß die Klebstoffschicht 44 zwischen dem Festkörper 10' und dem Kühlkörper 40' ähnlich wie beim ersten Ausführungsbeispiel im wesentlichen die konstante Dicke D aufweist, und zwar über ihre ganze Erstreckung in Richtung der zweiten Flachseite 14, allerdings gekrümmt ist.

Diese Lösung hat allerdings den Nachteil, daß die im wesentlichen gleiche Dicke D der Klebstoffschicht 44 nur dann erreicht ist, wenn die Dicke D der Differenz der Radien der Flächen F1' und F2' entspricht.

Bei einem vierten Ausführungsbeispiel, dargestellt in Fig. 10, sind die Flächen F1' und F2' beide ebenfalls gekrümmt, allerdings mit unterschiedlichen Radien, so daß die dabei entstehende Klebstoffschicht 44' in gleicher Weise wie beim zweiten Ausführungsbeispiel eine variable Dicke D aufweist und zwar eine variable Dicke D, die sich in radialer Richtung zur Mittelachse 26 vergrößert, so daß im wesentlichen die gleichen Verhältnisse erreichbar sind, wie beim zweiten Ausführungsbeispiel.

Hinsichtlich der übrigen Merkmale, insbesondere der Ausbildung der Klebstoffschicht 44 und 44' beim dritten und vierten Ausführungsbeispiel wird voll inhaltlich auf die Ausführungen zum zweiten und gegebenenfalls ersten Ausführungsbeispiel Bezug genommen.

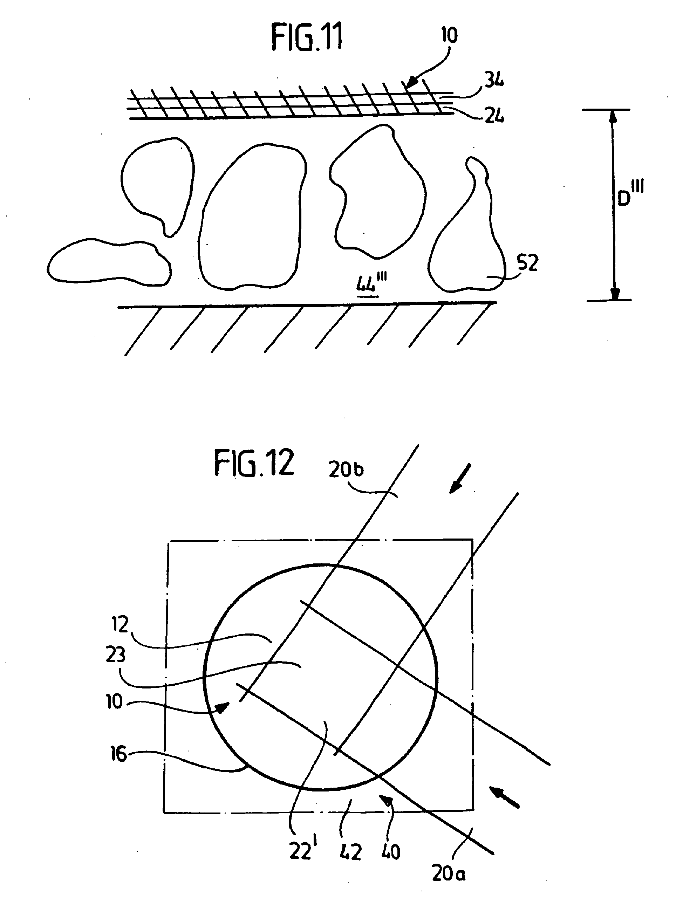

Bei einem fünften Ausführungsbeispiel, dargestellt in Fig. 11, wird kein ungefüllter Klebstoff verwendet, sondern die Klebstoffschicht 44"' weist Füllkörper 52 auf, welche zwischen dem Klebstoffmaterial eingelagert sind und eine Ausdehnung von mehr als 2 µm, vorzugsweise bis zu 30 oder 40 µm aufweisen, so daß die minimal erreichbare Dicke D"' der Klebstoffschicht 44" durch die etwa doppelte Größe der Füllkörper 52 limitiert ist.

Derartige Füllkörper sind beispielsweise Bornitrid, Diamant, Silber oder eventuell auch Cu oder Au, die alle zu einer guten Wärmeleitung beitragen, allerdings im Gegenzug dazu zu einer Vergrößerung der minimalen Dicke der Klebstoffschicht 44"' führen, so daß durch die Füllkörper eine Verbesserung der Wärmeleitfähigkeit der Klebstoffschicht 44"' gegenüber einer Klebstoffschicht von 44 oder 44' schwer erreichbar ist.

Im übrigen wird hinsichtlich weiterer Merkmale des fünften Ausführungsbeispiels vollinhaltlich auf die voranstehenden Ausführungsbeispiele Bezug genommen.

Bei einem sechsten, nicht erfindungsgemäßen Beispiel, welches vom Aufbau des Festkörpers 10 und des Kühlkörpers 40 dem ersten Ausführungsbeispiel entspricht, ist im Gegensatz zum ersten Ausführungsbeispiel das Pumpen des Festkörpers 10 über zwei Pumplichtstrahlungsfelder 20a und 20b vorgesehen, welche durch die Schmalseite 16 hindurch in den Festkörper 10 eintreten und sich in einem Volumenbereich 22' schneiden, so daß in diesem Volumenbereich 22' sich die Pumpleistungsdichte als Überlagerung der Pumplichtstrahlungsfelder 20a und 20b ergibt und somit eine höhere Pumpleistungsdichte vorliegt, als außerhalb des Volumenbereichs 22' (Fig. 12).

Im übrigen wird hinsichtlich der weiteren Merkmale des sechsten Beispiels vollinhaltlich auf das erste Ausführungsbeispiel Bezug genommen.

## Patentansprüche

1. Laserverstärkeranordnung mit einem zwei einander gegenüberliegende Flachseiten (12, 14) aufweisenden, scheibenförmigen Festkörper (10), der ein laseraktives Medium umfasst,
einem auf der zweiten Flachseite (14) des Festkörpers (10) angeordneten Reflektor (24) für ein Pumplichtstrahlungsfeld (20) sowie einem der zweiten Flachseite (14) zugeordneten Reflektor (34) für ein Verstärkerstrahlungsfeld (30),
einem Kühlkörper (40) mit einer Trägerfläche (42), welcher die zweite Flachseite (14) des Festkörpers (10) zugewandt angeordnet ist und mit welcher diese Flachseite (14) zur Ableitung von Wärme thermisch gekoppelt ist, wobei das Pumplichtstrahlungsfeld im Betrieb der Anordnung über die erste Flachseite (12) in den Festkörper (10) eintritt
der Festkörper (10) mit den mit der zweiten Flachseite (14) verbundenen Reflektoren (24, 34) durch eine Klebstoffschicht (44, 44', 44"') mit der Trägerfläche (42) mechanisch und thermisch gekoppelt ist, welche aus einem Klebstoff hergestellt ist, der im wesentlichen volumeninvariant von einem flüssigen Zustand in einen festen, vernetzten Zustand übergeht und die Klebstoffschicht (44, 44', 44"') einen aktiven Klebstoffschichtbereich (46) mit einem Wärmewiderstand von weniger als 10 K·mm²/W aufweist, wobei der aktive Klebstoffschichtbereich (46) ein Bereich der Klebstoffschicht ist, welcher im Betrieb der Anordnung an mindestens einen Teil des vom Pumplichtstrahlungsfeld (20) durchsetzten Volumenbereichs (22) des Festkörpers (10) mit den Reflektoren (24,34) angrenzt.

2. Laserverstärkeranordnung nach Anspruch 1, **dadurch gekennzeichnet, dass** der Wärmewiderstand des aktiven Klebstoffschichtbereichs (46) kleiner als 5K·mm²/W ist.

3. Laserverstärkejanordnung nach einem der voranstehenden Ansprüche,
**dadurch gekennzeichnet, dass** der aktive (46) mindestens der Bereich der Klebstoffschicht (44, 44', 44") ist, der an einen Volumenbereich (23) des Festkörpers (10) mit den Reflektoren (24, 34) angrenzt, in welchem im Betrieb der Anordnung eine Pumpleistungsdichte des Pumplichtstrahlungsfeldes (20) von ungefähr 80 % des Maximalwerts und mehr vorliegt.

4. Laserverstärkefanordnung nach einem der voranstehenden Ansprüche,
**dadurch gekennzeichnet, dass** der aktive Klebstoffschichtbereich (46) mindestens der Bereich der Klebstoffschicht (44, 44', 44") ist, welcher im Betrieb der Anordnung an den vom Pumplichtstrahlungsfeld (20) durchsetzten Volumenbereich (22) des Festkörpers (10) angrenzt.

5. Laserverstärkeranordnung nach einem der voranstehenden Ansprüche,
**dadurch gekennzeichnet, dass** der aktive Klebstoffschichtbereich (46) mindestens der Bereich der Klebstoffschicht (44, 44', 44") ist, welcher im Betrieb der Anordnung an den von mindestens zwei sich schneidenden Pumplichtstrahlungsfeldem durchsetzten Volumenbereich des Festkörpers (10) angrenzt.

6. Laserverstärkeranordnung nach einem der voranstehenden Ansprüche,
**dadurch gekennzeichnet, dass** die Klebstoffschicht (44, 44', 44"') eine Zugfestigkeit von größer als 1 N/mm² aufweist.

7. Laserverstärkeranordnung nach Anspruch 6, **dadurch gekennzeichnet, dass** die Klebstoffschicht (44, 44', 44"') eine Zugfestigkeit von größer als 5 N/mm² aufweist.

8. Laserverstärkeranordnung nach einem der voranstehenden Ansprüche,
**dadurch gekennzeichnet, dass** die Klebstoffschicht (44, 44', 44"') eine Scherfestigkeit von größer als 5 N/mm² aufweist.

9. Laserverstärkeranordnung nach Anspruch 8, **dadurch gekennzeichnet, dass** die Klebstoffschicht (44, 44', 44"') eine Scherfestigkeit von größer als 25 N/mm² aufweist.

10. Laserverstärkeranordnung nach einem der voranstehenden Ansprüche,
**dadurch gekennzeichnet, dass** die Klebstoffschicht (44, 44,', 44"') im festen vernetzten Zustand im wesentlichen thermisch forminvariant ist.

11. Laserverstärkeranordnung nach einem der voranstehenden Ansprüche,
**dadurch gekennzeichnet, dass** der Klebstoff ein Zweikomponentenklebstoff ist.

12. Laserverstärkeranordnung nach einem der voranstehenden Ansprüche,
**dadurch gekennzeichnet, dass** der Klebstoff stoffaustauschfrei vom flüssigen Zustand in den festen, vernetzten Zustand übergeht.

13. Laserverstärkeranordnung nach einem der voranstehenden Ansprüche,
**dadurch gekennzeichnet, dass** der Klebstoff ein durch Energiezufuhr mittels Bestrahlung aushärtender Klebstoff ist.

14. Laserverstärkeranordnung nach Anspruch 13, **dadurch gekennzeichnet, dass** der Klebstoff durch Bestrahlung mit Licht aushärtet.

15. Laserverstärkeranordnung nach Anspruch 14, **dadurch gekennzeichnet, dass** der Klebstoff durch Bestrahlung mit UV-Licht aushärtet.

16. Laserverstärkeranordnung nach einem der voranstehenden Ansprüche,
**dadurch gekennzeichnet, dass** der Klebstoff im nicht vernetzten Zustand eine Viskosität von weniger als 1000 mPa ·s aufweist.

17. Laserverstärkeranordnung nach einem der voranstehenden Ansprüche,
**dadurch gekennzeichnet, dass** die Klebstoffschicht (44, 44') füllstofffrei ist

18. Laserverstärkeranordnung nach einem der Ansprüche 1 bis 16, **dadurch gekennzeichnet, dass** die Klebstoffschicht (44"') einen Füllstoff aufweist.

19. Laserverstärkeranordnung nach Anspruch 18, **dadurch gekennzeichnet, dass** der Füllstoff (52) Nanopartikel aufweist.

20. Laserverstärkeranordnung nach Anspruch 18, **dadurch gekennzeichnet,**
**dass** der Füllstoff (52) Füllkörper mit einer Größe im Mikrometerbereich aufweist.

21. Laserverstärkeranordnung nach Anspruch 20, **dadurch gekennzeichnet, dass** der Füllstoff Füllkörper (52) aus einem oder mehreren der Stoffe Bornitrid, Diamant, Silber, Kupfer und/oder Gold aufweist.

22. Laserverstärkeranordnung nach einem der voranstehenden Ansprüche,
**dadurch gekennzeichnet, dass** im Betrieb der Anordnung der an den vom Verstärkerstrahlungsfeld (30) durchsetzten Volumenbereich (36) des Festkörpers (10) mit den Reflektoren (24, 34) angrenzende Klebstoffschichtbereich (46) eine Dicke (D) von weniger als 5 µm aufweist.

23. Laserverstärkeranordnung nach Anspruch 22, **dadurch gekennzeichnet,**
**dass** im Betrieb der Anordnung der an den vom Verstärkerstrahlungsfeld (30) durchsetzten Volumenbereich (36) des Festkörpers (10) mit den Reflektoren (24, 34) angrenzende Klebstoffschichtbereich (46) eine Dicke (D) von weniger als 2 µm aufweist.

24. Laserverstärkeranordnung nach einem der Ansprüche 18 bis 21, **dadurch gekennzeichnet, dass** im Betrieb der Anordnung der an den vom Verstärkerstrahlungsfeld (30) durchsetzten Volumenbereich (36) des Festkörpers (10) mit dem Reflektoren (24,34) angrenzende Klebstoffschichtbereich (46) eine Dicke von weniger als 50 µm aufweist.

25. Laserverstärkeranordnung nach einem der voranstehenden Ansprüche,
**dadurch gekennzeichnet, dass** die Klebstoffschicht (44, 44', 44"') optisch transparent ist.

26. Laserverstärkeranordnung nach einem der voranstehenden Ansprüche,
**dadurch gekennzeichnet, dass** die Klebstoffschicht (44) eine im wesentlichen gleichbleibende Dicke (D) aufweist.

27. Laserverstärkeranordnung nach einem der voranstehenden Ansprüche 1 bis 25,
**dadurch gekennzeichnet, dass** die Klebstoffschicht (44') ausgehend von einem an ein Zentrum (26) des vom Verstärkerstrahlungsfeld (30) durchsetzten Volumenbereichs (36) des Festkörpers (10) mit den Reflektoren (24, 34) angrenzenden zentralen Klebstoffschichtbereich in radialer Richtung zu dem Zentrum (26) eine zunehmende Dicke (D) aufweist.

28. Laserverstärkeranordnung nach Anspruch 27,
**dadurch gekennzeichnet, dass** die Klebstoffschicht (44') einen zu dem Zentrum (26) des vom Verstärkerstrahlungsfeld (30) durchsetzten Volumenbereichs (36) des Festkörpers (10) mit den Reflektoren (24, 34) im wesentlichen radialsymmetrischen Verlauf der Dicke (D) aufweist.

29. Laserverstärkeranordnung nach einem der voranstehenden Ansprüche,
**dadurch gekennzeichnet, dass** die Reflektoren (24, 34) zu einem einzigen Reflektor zusammengefasst sind.

30. Laserverstärkeranordnung nach einem der Ansprüche 1 bis 28, **dadurch gekennzeichnet, dass** die Reflektoren (24, 34) durch zwei unterschiedliche Relektorschichten (24, 34) auf der zweiten Flachseite (14) gebildet sind.

## Claims

1. Laser amplifying system comprising
a plate-like solid-state body (10) having two oppositely located flat sides (12, 14) and comprising a laser active medium,
a reflector (24) arranged on the second flat side (14) of the solid-state body (10) for a pumping light radiation field (20) and a reflector (34) associated with the second flat side (14) for an amplifying radiation field (30), and
a cooling member (40) with a support surface (42) which is arranged so as to face the second flat side (14) of the solid-state body (10), and with which this flat side (14) is thermally coupled for the discharge of heat, the pumping light radiation field entering the solid-state body (10) via the first flat side (12) during the operation of the system, the solid-state body (10) with the reflectors (24, 34) connected to the second flat side (14) being coupled mechanically and thermally to the support surface (42) by an adhesive layer (44, 44', 44"') produced from an adhesive material passing essentially invariant in volume from a liquid state into a solid, cross-linked state, and the adhesive layer (44, 44', 44"') having an active adhesive layer area (46) with a heat resistance of less than 10 K x mm²/W, the active adhesive layer area (46) being an area of the adhesive layer bordering during the operation of the system on at least a portion of the volume area (22), penetrated by the pumping light radiation field (20), of the solid-state body (10) with the reflectors (24, 34).

2. Laser amplifying system as defined in claim 1, **characterized in that** the heat resistance of the active adhesive layer area (46) is less than 5 K x mm²/W.

3. Laser amplifying system as defined in any one of the preceding claims, **characterized in that** the active adhesive layer area (46) is at least that area of the adhesive layer (44, 44', 44") bordering on a volume area (23) of the solid-state body (10) with the reflectors (24, 34), in which during the operation of the system a pumping power density of the pumping light radiation field (20) of approximately 80 % of the maximum value and more is present.

4. Laser amplifying system as defined in any one of the preceding claims, **characterized in that** the active adhesive layer area (46) is at least that area of the adhesive layer (44, 44', 44") bordering during the operation of the system on the volume area (22) of the solid-state body (10) penetrated by the pumping light radiation field (20).

5. Laser amplifying system as defined in any one of the preceding claims, **characterized in that** the active adhesive layer area (46) is at least that area of the adhesive layer (44, 44', 44") bordering during the operation of the system on the volume area of the solid-state body (10) penetrated by at least two intersecting pumping light radiation fields.

6. Laser amplifying system as defined in any one of the preceding claims, **characterized in that** the adhesive layer (44, 44', 44"') has a tensile strength of more than 1 N/mm².

7. Laser amplifying system as defined in claim 6, **characterized in that** the adhesive layer (44, 44', 44"') has a tensile strength of more than 5 N/mm².

8. Laser amplifying system as defined in any one of the preceding claims, **characterized in that** the adhesive layer (44, 44', 44"') has a shearing strength of more than 5 N/mm².

9. Laser amplifying system as defined in claim 8, **characterized in that** the adhesive layer (44, 44', 44"') has a shearing strength of more than 25 N/mm².

10. Laser amplifying system as defined in any one of the preceding claims, **characterized in that** the adhesive layer (44, 44', 44"') is essentially thermally invariant in shape in the solid, cross-linked state.

11. Laser amplifying system as defined in any one of the preceding claims, **characterized in that** the adhesive is a two-component adhesive.

12. Laser amplifying system as defined in any one of the preceding claims, **characterized in that** the adhesive passes from the liquid state into the solid, cross-linked state without any transfer of substances.

13. Laser amplifying system as defined in any one of the preceding claims, **characterized in that** the adhesive is an adhesive hardening by way of a supply of energy by means of radiation.

14. Laser amplifying system as defined in claim 13, **characterized in that** the adhesive is hardened by way of radiation with light.

15. Laser amplifying system as defined in claim 14, **characterized in that** the adhesive is hardened by way of radiation with UV light.

16. Laser amplifying system as defined in any one of the preceding claims, **characterized in that** the adhesive has a viscosity of less than 1000 mPa x s in the non-cross-linked state.

17. Laser amplifying system as defined in any one of the preceding claims, **characterized in that** the adhesive layer (44, 44') is free from filler material.

18. Laser amplifying system as defined in any one of claims 1 to 16, **characterized in that** the adhesive layer (44"') has a filler material.

19. Laser amplifying system as defined in claim 18, **characterized in that** the filler material (52) has nanoparticles.

20. Laser amplifying system as defined in claim 18, **characterized in that** the filler material (52) has filler bodies with a size in the micrometer range.

21. Laser amplifying system as defined in claim 20, **characterized in that** the filler material has filler bodies (52) consisting of one or more of the substances boron nitride, diamond, silver, copper and/or gold.

22. Laser amplifying system as defined in any one of the preceding claims, **characterized in that** during the operation of the system the adhesive layer area (46) bordering on the volume area (36), penetrated by the amplifying radiation field (30), of the solid-state body (10) with the reflectors (24, 34) has a thickness (D) of less than 5 µm.

23. Laser amplifying system as defined in claim 22, **characterized in that** during the operation of the system the adhesive layer area (46) bordering on the volume area (36), penetrated by the amplifying radiation field (30), of the solid-state body (10) with the reflectors (24, 34) has a thickness (D) of less than 2 µm.

24. Laser amplifying system as defined in any one of claims 18 to 21, **characterized in that** during the operation of the system the adhesive layer area (46) bordering on the volume area (36), penetrated by the amplifying radiation field (30), of the solid-state body (10) with the reflectors (24, 34) has a thickness of less than 50 µm.

25. Laser amplifying system as defined in any one of the preceding claims, **characterized in that** the adhesive layer (44, 44', 44"') is optically transparent.

26. Laser amplifying system as defined in any one of the preceding claims, **characterized in that** the adhesive layer (44) has an essentially constant thickness (D).

27. Laser amplifying system as defined in any one of the preceding claims 1 to 25, **characterized in that** the adhesive layer (44'), starting from a central adhesive layer area bordering on a center (26) of the volume area (36), penetrated by the amplifying radiation field (30), of the solid-state body (10) with the reflectors (24, 34) has an increasing thickness (D) in a radial direction in relation to the center (26).

28. Laser amplifying system as defined in claim 27, **characterized in that** the adhesive layer (44') has a course of the thickness (D) which is essentially radial symmetric to the center (26) of the volume area (36), penetrated by the amplifying radiation field (30), of the solid-state body (10) with the reflectors (24, 34).

29. Laser amplifying system as defined in any one of the preceding claims, **characterized in that** the reflectors (24, 34) are combined to form a single reflector.

30. Laser amplifying system as defined in any one of claims 1 to 28, **characterized in that** the reflectors (24, 34) are formed by two different reflector layers (24, 34) on the second flat side (14).

## Revendications

1. Dispositif d'amplificateur laser avec un corps solide (10) en forme de disque présentant deux faces planes (12, 14) opposées, le corps solide comprenant un milieu actif de laser,
un réflecteur (24) pour un champ de rayonnement de lumière de pompage (20) disposé sur la deuxième face plane (14) du corps solide (10), ainsi qu'un réflecteur (34) affecté à la deuxième face plane (14) pour un champ de rayonnement d'amplificateur (30),
un corps de refroidissement (40) avec une surface de support (42), vers laquelle est tournée la deuxième face plane (14) du corps solide (10) et avec laquelle ladite face plane (14) est thermiquement couplée pour la dissipation de chaleur,
où le champ de rayonnement de lumière de pompage pénètre dans le corps solide (10) par la première face plane (12) pendant le fonctionnement du dispositif,
le corps solide (10) avec les réflecteurs (24, 34) reliés à la deuxième face plane (14) est mécaniquement et thermiquement couplé à la surface de support (42) par une couche de colle (44, 44', 44"') réalisée par une colle passant d'un état liquide à un état solide réticulé en restant sensiblement invariable en volume et la couche de colle (44, 44', 44"') présente une zone de couche de colle active (46) avec une résistance thermique inférieure à 10 K · mm²/W,
où la zone de couche de colle active (46) est une zone de la couche de colle qui est adjacente à au moins une partie de la zone volumique (22) du corps solide (10) avec les réflecteurs (24, 34) noyautée par le champ de rayonnement de lumière de pompage (20) pendant le fonctionnement du dispositif.

2. Dispositif d'amplificateur laser selon la revendication 1, **caractérisé en ce que** la résistance thermique de la zone de couche de colle active (46) est inférieure à 5 K · mm²/W.

3. Dispositif d'amplificateur laser selon l'une des revendications précédentes, **caractérisé en ce que** la zone de couche de colle active (46) est au moins la zone de la couche de colle (44, 44', 44") qui est adjacente à une zone volumique (23) du corps solide (10) avec les réflecteurs (24, 34) dans laquelle, pendant le fonctionnement du dispositif, une puissance de pompage du champ de rayonnement de lumière de pompage (20) de 80 % environ de la valeur maximale et plus est disponible.

4. Dispositif d'amplificateur laser selon l'une des revendications précédentes, **caractérisé en ce que** la zone de couche de colle active (46) est au moins la zone de la couche de colle (44, 44', 44") qui est adjacente à la zone volumique (22) du corps solide (10) noyautée pendant le fonctionnement du dispositif par le champ de rayonnement de lumière de pompage (20).

5. Dispositif d'amplificateur laser selon l'une des revendications précédentes, **caractérisé en ce que** la zone de couche de colle active (46) est au moins la zone de la couche de colle (44, 44', 44") qui est adjacente à la zone volumique du corps solide (10) noyautée pendant le fonctionnement du dispositif par au moins deux champs de rayonnement de lumière de pompage se séparant.

6. Dispositif d'amplificateur laser selon l'une des revendications précédentes, **caractérisé en ce que** la couche de colle (44, 44', 44"') présente une résistance à la traction supérieure à 1 N/mm².

7. Dispositif d'amplificateur laser selon la revendication 6, **caractérisé en ce que** la couche de colle (44, 44', 44"') présente une résistance à la traction supérieure à 5 N/mm².

8. Dispositif d'amplificateur laser selon l'une des revendications précédentes, **caractérisé en ce que** la couche de colle (44, 44', 44"') présente une résistance au cisaillement supérieure à 5 N/mm².

9. Dispositif d'amplificateur laser selon la revendication 8, **caractérisé en ce que** la couche de colle (44, 44', 44"') présente une résistance au cisaillement supérieure à 25 N/mm².

10. Dispositif d'amplificateur laser selon l'une des revendications précédentes, **caractérisé en ce que** la couche de colle (44, 44' , 44"') en état solide réticulé est sensiblement thermiquement invariable en forme.

11. Dispositif d'amplificateur laser selon l'une des revendications précédentes, **caractérisé en ce que** la colle est une colle à deux composants.

12. Dispositif d'amplificateur laser selon l'une des revendications précédentes, **caractérisé en ce que** la colle passe sans transfert de substance de l'état liquide à l'état solide réticulé.

13. Dispositif d'amplificateur laser selon l'une des revendications précédentes, **caractérisé en ce que** la colle est une colle durcissant par apport d'énergie au moyen d'une irradiation.

14. Dispositif d'amplificateur laser selon la revendication 13, **caractérisé en ce que** la colle durcit par irradiation de lumière.

15. Dispositif d'amplificateur laser selon la revendication 14, **caractérisé en ce que** la colle durcit par irradiation de lumière UV.

16. Dispositif d'amplificateur laser selon l'une des revendications précédentes, **caractérisé en ce que** la colle présente une viscosité inférieure à 1000 mPa · s en état non réticulé.

17. Dispositif d'amplificateur laser selon l'une des revendications précédentes, **caractérisé en ce que** la couche de colle (44, 44') est exempte d'agent de charge.

18. Dispositif d'amplificateur laser selon l'une des revendications 1 à 16, **caractérisé en ce que** la couche de colle (4 4"') comprend un agent de charge.

19. Dispositif d'amplificateur laser selon la revendication 18, **caractérisé en ce que** l'agent de charge (52) comprend des nanoparticules.

20. Dispositif d'amplificateur laser selon la revendication 18, **caractérisé en ce que** l'agent de charge (52) comprend des corps de remplissage de grandeur comprise dans la plage micrométrique.

21. Dispositif d'amplificateur laser selon la revendication 20, **caractérisé en ce que** l'agent de charge comprend des corps de remplissage (52) d'une ou de plusieurs des substances que sont le nitrure de bore, le diamant, l'argent, le cuivre et/ou l'or.

22. Dispositif d'amplificateur laser selon l'une des revendications précédentes, **caractérisé en ce que** la zone de couche de colle active (46) adjacente à la zone volumique (36) du corps solide (10) avec les réflecteurs (24, 34) noyautée pendant le fonctionnement du dispositif par le champ de rayonnement d'amplificateur (30) présente une épaisseur (D) inférieure à 5 µm.

23. Dispositif d'amplificateur laser selon la revendication 22, **caractérisé en ce que** la zone de couche de colle active (46) adjacente à la zone volumique (36) du corps solide (10) avec les réflecteurs (24, 34) noyautée pendant le fonctionnement du dispositif par le champ de rayonnement d'amplificateur (30) présente une épaisseur (D) inférieure à 2 µm.

24. Dispositif d'amplificateur laser selon l'une des revendications 18 à 21, **caractérisé en ce que** la zone de couche de colle active (46) adjacente à la zone volumique (36) du corps solide (10) avec les réflecteurs (24, 34) noyautée pendant le fonctionnement du dispositif par le champ de rayonnement d'amplificateur (30) présente une épaisseur (D) inférieure à 50 µm.

25. Dispositif d'amplificateur laser selon l'une des revendications précédentes, **caractérisé en ce que** la couche de colle (44, 44', 44"') est optiquement transparente.

26. Dispositif d'amplificateur laser selon l'une des revendications précédentes, **caractérisé en ce que** la couche de colle (44) présente une épaisseur (D) sensiblement constante.

27. Dispositif d'amplificateur laser selon l'une des revendications 1 à 25, **caractérisé en ce que** la couche de colle (44') présente une épaisseur (D) qui augmente depuis une zone de couche de colle centrale, adjacente à un centre (26) de la zone volumique (36) du corps solide (10) avec les réflecteurs (24, 34) noyautée par le champ de rayonnement d'amplificateur (30) en direction radiale par rapport au centre (26).

28. Dispositif d'amplificateur laser selon la revendication 27, **caractérisé en ce que** la couche de colle (44') présente un tracé d'épaisseur (D) sensiblement symétrique radialement par rapport au centre (26) de la zone volumique (36) du corps solide (10) avec les réflecteurs (24, 34) noyautée par le champ de rayonnement d'amplificateur (30).

29. Dispositif d'amplificateur laser selon l'une des revendications précédentes, **caractérisé en ce que** les réflecteurs (24, 34) sont regroupés en un seul réflecteur.

30. Dispositif d'amplificateur laser selon l'une des revendications 1 à 28, **caractérisé en ce que** les réflecteurs (24, 34) sont formés par deux couches de réflecteur différentes (24, 34) sur la deuxième face plane (14).
